# FASCICULE DE BREVET EUROPEEN

(11) **EP 0 933 273 B1**
(45) Date de publication et mention de la délivrance du brevet: **29.05.2002**
(21) Numéro de dépôt: 99102000.9
(22) Date de dépôt: 01.02.1999
(51) Int. Cl.: B60T 8/18

(54) **Compensateur double de freinage asservi à la charge d'un véhicule**
Fahrzeuglastabhängiger Zweikreisbremsregler
Vehicle load dependent dual circuit braking corrector

(30) Priorité: 30.01.1998 FR 9801095
(43) Date de publication de la demande: 04.08.1999
(73) Titulaire: Bosch Systemes de Freinage, 93700 Drancy (FR)
(72) Inventeur: Kientz, Jean-Marc, 77270 Villeparisis (FR)

(56) Documents cités:
- EP-A- 0 053 651
- EP-A- 0 223 641
- DE-A- 3 925 419
- FR-A- 2 460 818
- US-A- 4 615 566
- US-A- 5 653 513
- PATENT ABSTRACTS OF JAPAN vol. 007, no. 020 (M-188), 26 janvier 1983 -& JP 57 175453 A (AISHIN SEIKI KK), 28 octobre 1982

## Description

La présente invention concerne les compensateurs de freinage, destinés à être interposés entre une source de pression hydraulique et un circuit de freinage de véhicule automobile.

Les compensateurs sont bien connus dans l'art antérieur, tel qu'illustré par exemple par les documents US-A-4 615 566, EP-A-0 053 651, ou EP-A-0 223 641 (le document EP-A-0 223 641 est considéré comme l'état de le technique le plus proche), et permettent de distribuer à leur sortie, et à destination des freins arrière des véhicules à moteur, une pression de freinage corrigée, liée à la pression de freinage appliquée à la fois sur leur entrée et sur les roues avant du véhicule, mais inférieure à cette dernière au delà d'un seuil déterminé, appelé communément « point de coupure » dans la technique automobile.

De façon classique, ils comportent un corps pourvu de deux alésages, un piston hydraulique coulissant dans chaque alésage et étant susceptible de contrôler l'écoulement d'un fluide hydraulique dans un circuit de freinage respectif, les deux pistons étant déplaçables sous l'action d'un palonnier monté à basculement sur une tige de commande.

L'un des inconvénients rencontrés dans la réalisation de tels compensateurs réside dans le fait que, en fonctionnement normal, le palonnier doit pouvoir osciller autour de sa position neutre pour égaliser les pressions en sorties des deux circuits, et que, en cas de défaillance de l'un des circuits hydrauliques, il est nécessaire de limiter le débattement angulaire du palonnier pour obtenir dans le circuit hydraulique intact un point de coupure supérieur à celui du fonctionnement initial, et assurer ainsi dans le circuit intact une pression supérieure.

Dans ce contexte, l'invention a pour but de proposer un compensateur double de freinage, dans lequel la limitation du débattement angulaire du palonnier en cas de défaillance dans l'un des circuits hydrauliques soit obtenue de façon simple et fiable, sans accroître la complexité du compensateur.

Un compensateur double de freinage ayant les caractéristiques du préambule de la revendication 1 est décrit dans EP-A-0 223 641.

A cette fin, le compensateur double de l'invention est essentiellement caractérisé en ce qu'un fourreau est intercalé entre la tige de commande et le palonnier, le fourreau comportant un manchon cylindrique monté avec un premier jeu radial sur la tige de commande et une collerette reçue à coulissement sans jeu axial et avec un deuxième jeu radial dans un logement formé dans le palonnier.

D'autres buts, caractéristiques et avantages de l'invention ressortiront clairement de la description qui en est faite ci-après, à titre indicatif et nullement limitatif, en référence aux dessins annexés, dans lesquels:
- la Figure 1 est une vue en coupe d'un compensateur double réalisé conformément à la présente invention, et
- la Figure 2 est une vue en coupe à plus grande échelle du montage du palonnier sur la tige de commande.

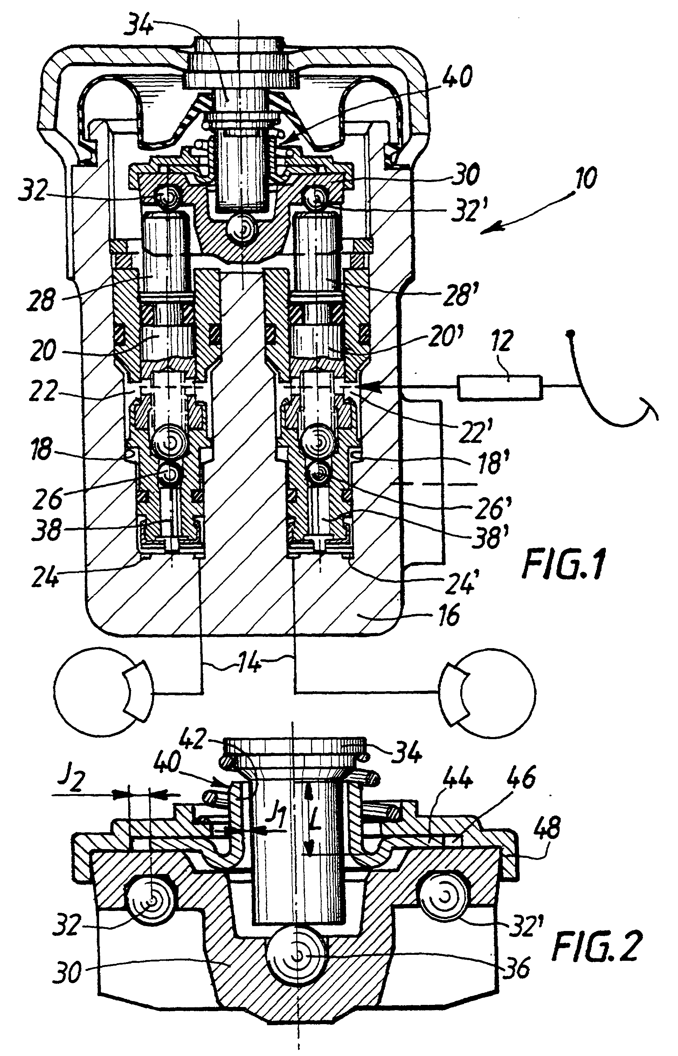

Comme on le voit sur la Figure 1, l'invention concerne un compensateur de freinage 10, destiné à être interposé entre une source de pression hydraulique, telle qu'un maître-cylindre 12, et le circuit de freinage arrière 14 d'un véhicule automobile, de manière à fournir à ce circuit de freinage 14 une pression égale à la pression de sortie de la source de pression pour les faibles valeurs de cette pression, et une pression inférieure à celle de la source pour les valeurs de cette dernière qui sont supérieures au point de coupure..

Ce compensateur comprend, de façon classique, un corps 16 pourvu de deux alésages étagés 18 et 18' d'axes parallèles, un piston hydraulique étagé 20, 20' coulissant dans chacun de ces alésages et y délimitant des premières chambres de pression 22, 22' en communication permanente avec le maître-cylindre 12, et des deuxièmes chambres de pression 24, 24' en communication permanente avec le circuit de freinage arrière 14 du véhicule.

De façon connue, les pistons 20 et 20' comportent un clapet 26, 26' susceptible de mettre en communication les chambres de pression 22 et 24, ou 22' et 24' suivant la position occupée par les pistons 20, 20' dans leurs alésages respectifs. Les clapets 26, 26' peuvent comporter une seule bille ou, comme on l'a représenté sur la Figure 1, à plusieurs billes. Sur la Figure 1, les pistons 20 et 20' occupent une position dans laquelle les clapets 26 et 26' sont fermés. Les extrémités 28 et 28' des pistons 20 et 20' se projettent en dehors des alésages 18 et 18' et sur lesquelles vient en appui un palonnier 30 au travers d'éléments d'appui 32, 32' présentant des surfaces sphériques, par exemple des billes.

Une tige de commande 34 est elle-même en appui sur le palonnier 30 par l'intermédiaire d'un élément d'appui 36 présentant une surface sphérique, par exemple une troisième bille, de sorte que le palonnier 30 est monté à basculement sur la tige de commande 34.

De façon également connue, un poussoir 38, 38' en appui sur le corps 16 agit sur le clapet 26, 26' dans un sens propre à en permettre l'ouverture lorsqu'une pression relativement basse règne dans la seconde chambre 24, 24' et le piston 20, 20' coulisse axialement dans l'alésage 18, 18', sous l'effet d'une élévation de pression dans cette seconde chambre 24, 24', dans un sens propre à permettre la fermeture du clapet. Pour ce faire, le piston 20, 20' est étagé et présente, dans la première chambre 22, 22' une section inférieure à la section qu'il présente dans la deuxième chambre 24, 24'.

Conformément à la présente invention, et comme on le voit mieux sur la Figure 2, un fourreau 40 est monté sur la tige de commande 34. Ce fourreau 40 comporte une partie cylindrique en forme de manchon 42, montée de façon à présenter un jeu radial J₁ par rapport à la tige de commande 34. Ce jeu J₁ a été représenté de façon exagérée sur la Figure 2 pour la clarté des dessins.

Le fourreau 40 comporte également une partie en forme de disque ou de collerette 44 s'étendant radialement à partir du manchon 42. Cette collerette 44 est reçue dans un logement annulaire 46 du palonnier 30, obtenu par exemple à l'aide d'une tôle 48 mise en forme et sertie sur le palonnier 30. Le logement annulaire 46 est réalisé de telle façon que la collerette 44 y soit reçue sans jeu axial, et avec un jeu radial J₂, représenté également de façon exagérée sur la Figure 2 pour la clarté des dessins.

Le jeu radial J₂ de la collerette 44 dans son logement annulaire 46 est supérieur au jeu radial J₁ entre le manchon 42 et la tige de commande 34. De plus, la différence entre les jeux radiaux J₂ et J₁ est supérieure ou égale aux tolérances de fabrication pour le défaut d'alignement entre l'axe de la tige de commande 34 et l'axe de symétrie du compensateur double, ce dernier étant matérialisé par le point de contact entre l'extrémité de la tige de commande 34 et la bille 36.

Lorsque le compensateur est en position de repos, la charge supportée par l'essieu arrière du véhicule est transmise, par un système (non représenté) de leviers et de ressorts, à la tige de commande 34 du compensateur, qui est donc soumise à un effort F₁ dirigé vers le bas (en considérant les Figures). Cet effort F₁ est réparti sur chaque piston 20 et 20' par le palonnier 30, chaque piston étant ainsi soumis à un effort égal à la moitié de F₁. De plus, les pistons 20, 20' sont en butée sur le corps 16 du compensateur, de sorte que les clapets 26, 26' sont soulevés de leur sièges respectifs et que la pression hydraulique peut alimenter le circuit hydraulique 14 menant aux moteurs des freins de roues arrière.

En fonctionnement normal, lorsque le conducteur du véhicule actionne la pédale de freinage, il en résulte une augmentation de pression dans le maître-cylindre qui est transmise aux premières chambres de pression 22, 22' du compensateur 10. Cette pression s'exerce sur la section des pistons 20, 20' et engendre sur ceux-ci un effort F₂ dirigé vers le haut (en considérant les Figures). Lorsque l'effort F₂ devient supérieur à l'effort (F₁ / 2), les pistons 20 et 20' se déplacent alors vers le haut, ce qui provoque la fermeture des clapets 26 et 26' et l'interruption de la liaison avec les moteurs de freins de roues arrière. La valeur de la pression pour laquelle les clapets se ferment est appelée le point de coupure du compensateur.

La pression engendrée par le maître-cylindre continuant d'augmenter, elle va engendrer sur les pistons 20 et 20' un effort F₃ provenant de la différence entre les sections des pistons étagés 20 et 20', et dirigé vers le bas des Figures. Il en résulte que les clapets 26 et 26' sont à nouveau soulevés de leur sièges respectifs, et que la pression peut à nouveau augmenter dans les moteurs de freins de roues arrière. L'effort dû à cette augmentation de pression s'ajoute alors à l'effort F₂ s'exerçant sur les pistons 20, 20', redevient supérieur à l'effort F₁, et provoque une nouvelle fermeture des clapets 26, 26'.

On obtient donc dans le circuit 14 relié aux moteurs des freins de roues arrière une pression égale à la pression engendrée par le maître-cylindre tant que celle-ci est inférieure au point de coupure, et au delà de ce point de coupure, une pression inférieure à celle qui est engendrée par le maître-cylindre, mais proportionnelle à cette dernière.

Dans une conception classique de compensateur double, en cas de défaillance hydraulique dans l'un des circuits reliés à la première chambre 22, 22' ou à la deuxième chambre 24, 24' associées à l'un des pistons 20 ou 20', par exemple le piston 20', la pression hydraulique ne peut plus croître dans les chambres 22' et 24', de sorte qu'aucun effort tel que F₂ n'est exercé sur le piston 20', alors que le piston 20 est soumis à cet effort. Il est donc seul à se soulever en dehors de l'alésage étagé 18. Dans ce mouvement, il fait pivoter le palonnier 30 autour de la bille 32', de sorte que la bille 36, recevant l'information de charge sur l'essieu arrière du véhicule, ne s'élève que sur une distance égale à la moitié de la distance parcourue par la bille 32. Il en résulte que l'effort F1 exercé sur le piston 20 est inférieur à ce qu'il devrait être, et que la valeur du point de coupure est diminuée dans la même proportion.

L'invention permet de remédier à cet inconvénient. En effet, dans l'hypothèse de la défaillance de l'un des circuits hydrauliques associés au piston 20', ce dernier n'étant soumis à aucun effort tel que F₂. La pression hydraulique régnant dans la première chambre de pression 22 s'exerce sur la section du piston 20 et engendre l'effort F₂ qui le fait se soulever en dehors de l'alésage étagé 18. Dans ce mouvement, il fait pivoter le palonnier 30 autour de la bille 32', jusqu'à ce que le manchon 42 vienne se coincer sur la tige de commande 34. On pourra librement choisir la longueur axiale L du manchon 42, ainsi que le jeu J₁ avec lequel il est monté sur la tige de commande 34, pour déterminer l'angle de rotation maximale que peut parcourir le palonnier 30 sans venir en prise avec la tige de commande 34, soit encore la distance maximale dont un piston peut s'élever en dehors de son alésage par rapport à l'autre piston sans engager la tige de commande 34.

La venue en engagement du manchon 42 sur la tige de commande 34 est de plus facilitée par le jeu radial J₂ prévu entre la collerette 44 et son logement annulaire 46, le fourreau 40 ne perturbant pas la mise en biais du palonnier 30. Une fois que le palonnier 30 est venu en prise avec la tige de commande 34, il ne peut plus basculer davantage, de sorte qu'il subit un mouvement de translation axiale, la bille 32' étant soulevée du piston 20'. Le piston 20 reçoit alors à lui tout seul la totalité de l'effort F₁, de sorte que, dans cette situation de défaillance hydraulique, le point de coupure s'établit à une valeur supérieure à sa valeur en fonctionnement normal.

On a donc bien réalisé un compensateur double de freinages dans lequel un débattement angulaire limité du palonnier est possible pour assurer un fonctionnement normal, et dans lequel la limitation du débattement angulaire du palonnier en cas de défaillance dans l'un des circuits hydrauliques est obtenue de façon simple et fiable, sans accroître la complexité du compensateur, de manière à augmenter la valeur du point de coupure sur le circuit intact.

## Revendications

1. Compensateur double de freinage (10), destiné à être interposé entre au moins une source de pression hydraulique (12) et deux circuits de freinage (14) de véhicule automobile, et comportant un corps (16) pourvu de deux alésages (18, 18'), un piston hydraulique (20, 20') coulissant dans chaque alésage (18, 18') et étant susceptible de contrôler l'écoulement d'un fluide hydraulique dans un circuit de freinage respectif, les deux pistons (20, 20') étant déplaçables sous l'action d'un palonnier (30) monté à basculement sur une tige de commande (34), **caractérisé en ce qu'**un fourreau (40) est intercalé entre la tige de commande (34) et le palonnier (30), le fourreau (40) comportant un manchon cylindrique (42) monté avec un premier jeu radial (J₁) sur la tige de commande (34) et une collerette (44) reçue à coulissement sans jeu axial et avec un deuxième jeu radial (J₂) dans un logement (46) formé dans le palonnier (30).

2. Compensateur double de freinage suivant la revendication 1, **caractérisé en ce que** le deuxième jeu radial (J₂) est supérieur au premier jeu radial (J₁).

3. Compensateur double de freinage suivant la revendication 1, **caractérisé en ce que** le logement (46) du palonnier (30) est formé par une tôle (48) préformée et sertie sur le palonnier (30).

## Claims

1. Double brake equalizer (10) intended to be inserted between at least one source of hydraulic pressure (12) and two brake circuits (14) of a motor vehicle, and comprising a body (16) which has two bores (18, 18'), a hydraulic piston (20, 20') sliding in each bore (18, 18') and being capable of controlling the flow of a hydraulic fluid in a respective brake circuit, the two pistons (20, 20') being movable under the action of an equalizer bar (30) mounted to rock on a control rod (34), **characterized in that** a sheath (40) is inserted between the control rod (34) and the equalizer bar (30), the sheath (40) comprising a cylindrical tube (42) mounted with a first radial clearance (J₁) on the control rod (34) and a flange (44) accommodated with sliding without axial clearance and with a second radial clearance (J₂) in a housing (46) formed in the equalizer bar (30).

2. Double brake equalizer according to Claim 1, **characterized in that** the second radial clearance (J₂) is greater than the first radial clearance (J₁).

3. Double brake equalizer according to Claim 1, **characterized in that** the housing (46) of the equalizer bar (30) is formed by a pre-formed metal sheet (48) crimped to the equalizer bar (30).

## Patentansprüche

1. Zweikreisbremsregler (10) zum Einsetzen zwischen mindestens einer hydraulischen Druckquelle (12) und zwei Fahrzeugsbremskreisen (14), mit einem Körper (16), der mit zwei Bohrungen (18, 18') versehen ist, einem hydraulischen Kolben (20, 20'), der in jeder Bohrung (18, 18') gleitet und die Strömung eines Druckmittels in einem jeweiligen Bremskreis kontrollieren kann, wobei beide Kolben (20, 20') unter der Wirkung eines Bremsausgleichgestänges (30) verschoben werden, der an einer Steuerstange (34) kippbar angebracht ist, **dadurch gekennzeichnet, daß** eine Hülse (40) zwischen der Steuerstange (34) und dem Bremsausgleichgestänge (30) eingesetzt ist, wobei die Hülse (40) eine zylindrische Muffe (42), die mit einem ersten radialen Spiel (J₁) an der Steuerstange (34) angebracht ist, und einen Bund (44) umfaßt, der verschiebbar ohne axiales Spiel und mit einem zweiten radialen Spiel (J₂) in einer im Bremsausgleichgestänge (30) gebildeten Aufnahme (46) aufgenommen ist.

2. Zweikreisbremsregler nach Anspruch 1, **dadurch gekennzeichnet, daß** das zweite radiale Spiel (J₂) größer ist als das erste radiale Spiel (J₁)

3. Zweikreisbremsregler nach Anspruch 1, **dadurch gekennzeichnet, daß** die Aufnahme (46) des Bremsausgleichgestänges (30) durch ein vorgefertigtes und am Bremsausgleichgestänge (30) verstemmtes Blech (48) gebildet ist.
